# EUROPEAN PATENT SPECIFICATION

(11) **EP 2 853 517 B1**
(45) Date of publication and mention of the grant of the patent: **05.04.2017**
(21) Application number: 14397526.6
(22) Date of filing: 04.09.2014
(51) Int. Cl.: C03B 35/18, C03B 27/04, C03B 27/044, C03B 29/08, C03B 35/16

(54) **Method and apparatus for tempering glass sheets**
Verfahren und Vorrichtung zum Härten von Glasscheiben
Procédé et appareil de trempe de plaques de verre

(30) Priority: 25.09.2013 FI 20135958
(43) Date of publication of application: 01.04.2015
(73) Proprietor: Glaston Finland Oy, 33730 Tampere (FI)
(72) Inventor: Vehmas, Jukka, 33270 Tampere (FI); Pesonen, Tarmo, 37550 Lempäälä (FI)
(74) Representative: LEITZINGER OY

(56) References cited:
- EP-A1- 1 547 980
- EP-A1- 1 659 100
- EP-A1- 2 277 836
- EP-A2- 0 464 805
- EP-A2- 0 937 687
- WO-A1-98/12146
- US-A- 3 396 000
- US-A- 4 076 511
- US-A- 4 617 043
- US-A- 5 188 651
- US-A1- 2003 076 487
- US-A1- 2006 150 683
- US-A1- 2013 152 635
- US-B1- 6 279 350

## Description

The invention relates to a method for tempering glass sheets, said method comprising heating the glass sheets to a tempering temperature in a furnace in which the glass sheet is moved back and forth while supported on rolls, and feeding the heated glass sheets into a quench unit which is divided into two quenching zones with separately controlled blasting pressures.

The invention relates also to an apparatus for tempering glass sheets, said apparatus comprising a furnace, rolls in the furnace which are rotated back and forth for moving the glass sheets back and forth, a quench unit including a first and a second quenching zone, first cooling air boxes with their nozzles in the first quenching zone, second cooling air boxes with their nozzles in the second quenching zone, means for conducting the cooling air separately into the first and second cooling air boxes, and conveyor rolls in the quenching zones.

Tempering furnaces for glass sheets, in which the glass sheets are oscillated both in a heating furnace and in a quench unit, have been generally known and in use for several decades. Examples of such heating furnaces and quench units are shown in publications US 3994711 B1, EP 0265787 and EP 0968970 B1.

Publication WO 98/12146 shows a method of cooling glass sheet which has been heated to tempering temperature and cooling by latent heat of vaporization in which the cooling medium is used to extract the thermal energy by a phase change or latent heat exchange. For this purpose the cooling medium is wet steam or liquid in the first quench station which contain nozzles, orifices or slots for the steam injection. Though the cooling by vaporization is effective, this principle of quenching has not become common. One reason for this is the difficultly to control distribution of the steam wetness and temperature evenly over the glass surface. It is also difficult to prevent condensation of the wet steam into larger droplets which could immediately destroy the glass sheet.

One of the major problems in furnaces with air cooling type quenching is anisotropy developing in glass, i.e. an uneven distribution of chilling effect across the glass surface area. This leads to small density variations in glass, as a consequence of which the reflection and transmission properties of glass are different in various regions, which can be seen as disturbing patterns in certain lighting conditions. The cooling jets of a chiller are visible as separate stripes and a sparse cord wrapping of the roll is seen as a zigzag pattern. The anisotropy problem is particularly related to the initial stage of cooling, since anisotropy is no longer developed once the glass temperate is below 470°C. The tempering temperature, to which the glass is heated in the furnace, is approximately 630°C.

It is an objective of the invention to provide a method and apparatus of the foregoing type, which are capable of minimizing the anisotropy problem without substantially increasing the costs of a traditional tempering furnace.

This objective is attained by a method of the invention on the basis of characterizing features presented in the appended claim 1. This objective is also attained by an apparatus of the invention on the basis of characterizing features presented in the appended claim 5. Preferred embodiments of the invention are presented in the dependent claims.

One exemplary embodiment of the invention will now be described more closely with reference to the accompanying drawings, in which
- Fig. 1: shows in a schematic plan view an apparatus for use in implementing a method of the invention.
- Fig. 2: shows a short segment of the cover for a cooling air box used in a first quenching zone 3.
- Fig. 3: shows the same as fig. 2, but with an alternatively designed slit nozzle.
- Fig. 4: shows a short segment of the cover for a cooling air box used in a second quenching zone 4.

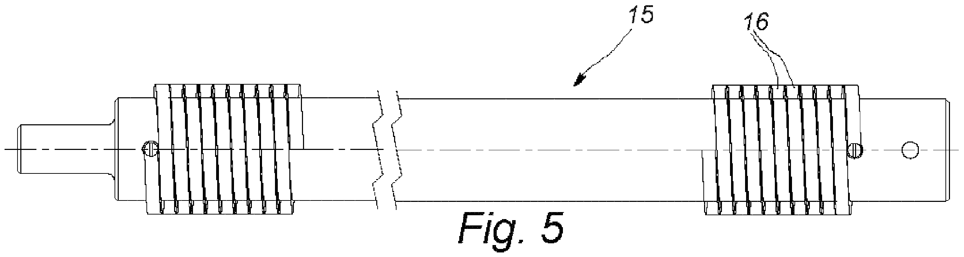

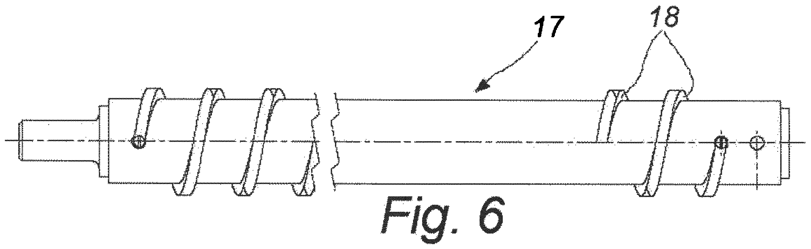

- Fig. 5: shows a conveyor roll used in the first quenching zone 3, and
- Fig. 6: shows a conveyor roll used in the second quenching zone 4.

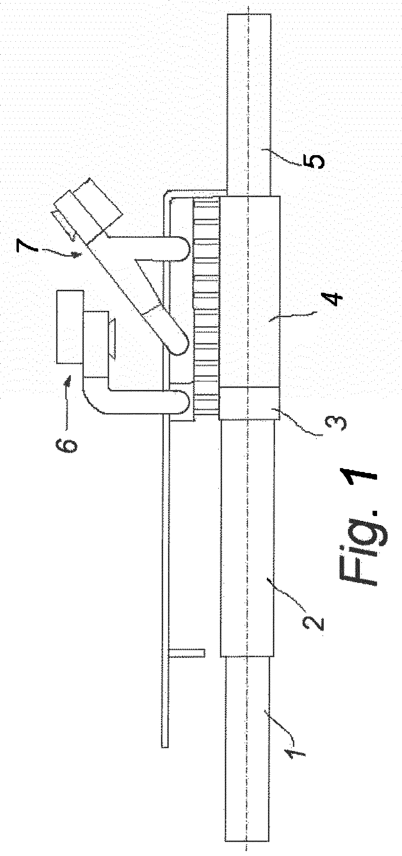

The apparatus shown in fig. 1 comprises a feed conveyor 1, a heating furnace 2, a quench unit with a first quenching zone 3 and a second quenching zone 4, as well as an unloading conveyor 5. A blower mechanism 6 is used for pressurizing the cooling air to be blasted into the first quenching zone 3. A blower mechanism 7 is used for pressurizing the cooling air to be blasted into the second quenching zone 4. The separate blower mechanisms enable blasting pressures of the quenching zones 3 and 4 to be controlled separately.

In the furnace 2, glass sheets are moved back and forth upon rolls, which are rotated back and forth. The rolls can be ceramic. The heated glass sheets are driven from the furnace 2 without stopping through the first quenching zone 3 into the second quenching zone 4. The glass sheets have a dwell time in the quenching zone 3 of at least 20 seconds, preferably at least 30 seconds, typically e.g. about 40 seconds. In the second quenching zone 4, the glass sheet is moved back and forth upon rolls 17 with a sparse cord wrapping 18. In the first quenching zone 3, on the other hand, the glass sheets are carried on rolls 15 with a full cord wrapping by cords 16, thus providing a uniform thermal conduction effect from the rolls.

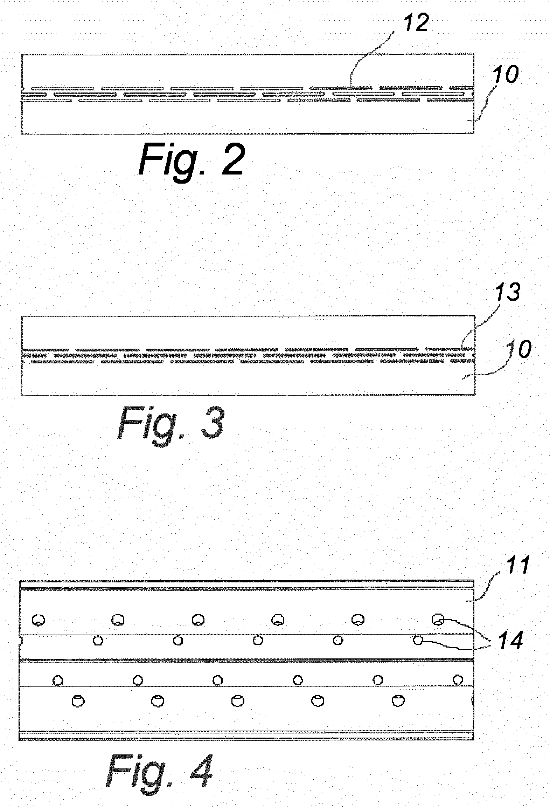

Another essential feature in the invention is that, in the first quenching zone 3, cooling air is blasted onto the opposite surfaces of a glass sheet with slit nozzles 10 (figs. 2 and 3) whose orifices 12, 13 are long slits transverse to the traveling direction of glass sheets. Hence, the blasting effect is regionally uniform and consistent. In the exemplary embodiment of fig. 2, the slits 12 have a length several tenfold more than the width thereof, and webs between the slits are about 1/10 of the length of the slits. Accordingly, in a nozzle cover constructed e.g. with three rows of slits, there are two nozzle slits at each web in the traveling direction of glass sheets. Hence, the webs do not produce anisotropy-creating stripes on the surface of a glass sheet. A more or less similar result is obtained with the slit nozzle solution of fig. 3, wherein the slit nozzle 13 is constructed with an array of densely drilled holes, in which the web between the holes does not exceed the diameter of the hole. Thus, the air jets emerging through the holes join each other to make up a homogeneous wide jet.

In the second quenching zone 4, the nozzles 14 of cooling air boxes 11 are hole-type nozzles, the holes being circular and the holes making up rows transverse to the conveying direction with a distance between the holes being multifold as compared to the diameter of the holes. Thus, the holes do not produce a slit effect. However, this has no longer a substantial significance in terms of the anisotropy problem as the glass sheet has already chilled adequately in the quenching zone 3 (preferably to below 470°C), such that anisotropy (stripes in the glass traveling direction) is not created any more.

Neither do the fully cord wrapped rolls 15 in the zone 3 produce a zigzag anisotropy pattern. In the section 4, this hazard no longer exists even though the rolls 17 are provided with just a sparse cord wrapping.

It is observed that the combination according to the invention enables an essential problem to be eliminated in a cost effective manner. The more costly nozzles and rolls are only needed in a small section of the quench unit 3, 4. The quench unit has a size for example in the order of 3+15,6 m, whereby a portion of the more expensive quenching zone 3 is less than 1/5 of the length of the entire quench unit. When implementing the invention, the lengths of the zones 3 and 4 have a ratio of no more than 1/3, preferably no more than ¼, and typically the aforesaid slightly less than 1/5.

The slit nozzles 12, 13 and the hole-type nozzles 14 provide different heat transfer coefficients, even with an equal cross-sectional area of the hole and with an equal blasting pressure. This is why the blasting pressure of the slit nozzles 12, 13 must be controlled separately with respect to the blasting pressure of the hole-type nozzles 14. In addition, blasting distances for the nozzles 12, 13, 14 of the first and second quenching zones are controlled independently in each zone 3, 4. Thus, the first and second quenching zones 3, 4 are totally separate from each other by being different structurally, functionally and in terms of adjustments and by being separately controlled.

## Claims

1. A method for tempering glass sheets, said method comprising heating the glass sheets to a tempering temperature in a furnace (2) in which the glass sheets are moved back and forth while supported on rolls (17), and feeding the heated glass sheets into a quench unit (3, 4) which is divided into two quenching zones with separately controlled blasting pressures, the glass sheets being driven without stopping through the first quenching zone (3) into the second quenching zone (4) **characterized in that** in the first quenching zone (3) cooling air is blasted onto glass sheet surfaces with slit nozzles (12, 13), that in the second quenching zone (4) cooling air is blasted onto glass sheet surfaces with hole-type nozzles (14) and that the glass sheet is moved back and forth upon the rolls (17) in the second quenching zone (4)

2. A method according to claim 1, **characterized in that** in the first quenching zone (3) a glass sheet is conveyed upon fully cord wrapped rolls (15) and in the second quenching zone (4) a glass sheet is conveyed upon sparsely cord wrapped rolls (17).

3. A method according to claim 1 or 2, **characterized in that** the glass sheet stays in the first quenching zone (3) for at least 20 seconds.

4. A method according to any of claims 1- 3, **characterized in that** blasting distances of the first and second quenching zones' nozzles (12, 13, 14) are controlled independently in each zone (3, 4).

5. An apparatus for tempering glass sheets, said apparatus comprising a furnace (2), rolls (17) in the furnace which are rotated back and forth for moving the glass sheets back and forth, a quench unit (3, 4) including a first and a second quenching zone, first cooling air boxes (10) with their nozzles (12, 13) in the first quenching zone, second cooling air boxes (11) with their nozzles (14) in the second quenching zone, means (6, 7, 8) for conducting the cooling air separately into the first and second cooling air boxes (10, 11), and conveyor rolls (15, 17) in the quenching zones, the rolls (15) of the first quenching zone (3) being adapted to be rotated continuously in one direction, **characterized in that** the nozzles of the first cooling air boxes (10) are slit nozzles (12, 13), that the nozzles (14) of the second cooling air boxes (11) are hole-type nozzles, the holes being circular, and the rolls (17) of the second quenching zone (4) are adapted to be rotated back and forth.

6. An apparatus according to claim 5, **characterized in that** the rolls (15) of the first quenching zone (3) are fully wrapped with cord and the rolls (17) of the second quenching zone (4) are sparsely wrapped with cord.

7. An apparatus according to claim 5 or 6, **characterized in that** the glass sheets have a dwell time in the first quenching zone (3) of at least 20 seconds.

8. An apparatus according to any of claim5-7, **characterized in that** the slit nozzle (13) is constructed with an array of densely drilled holes, wherein the web between the holes does not exceed the diameter of the holes.

9. An apparatus according to any of claim5-8, **characterized in that** blasting distances for the nozzles (12, 13, 14) of the first and second quenching zones' (3, 4) are independently controllable both above and below the glass sheet.

## Patentansprüche

1. Verfahren zum Tempern von Glasscheiben, wobei das Verfahren das Erhitzen der Glasscheiben auf eine Tempertemperatur in einem Ofen (2), in dem die Glasscheiben hin und her bewegt werden, während sie auf Walzen (17) gestützt werden, und das Zuführen der erhitzten Glasscheiben in eine Kühleinheit (3, 4) umfasst, die in zwei Kühlbereiche mit getrennt gesteuerten Strahldrücken aufgeteilt ist, wobei die Glasscheiben ohne Anhalten durch den ersten Kühlbereich (3) in den zweiten Kühlbereich (4) transportiert werden, **dadurch gekennzeichnet, dass** in dem ersten Kühlbereich (3) Kühlluft durch Schlitzdüsen (12, 13) auf die Glasscheibenoberflächen gestrahlt wird, dass in dem zweiten Kühlbereich (4) Kühlluft durch lochartige Düsen (14) auf die Glasscheibenoberflächen gestrahlt wird und dass die Glasscheibe auf den Walzen (17) in dem zweiten Kühlbereich (4) hin und her bewegt wird.

2. Verfahren nach Anspruch 1, **dadurch gekennzeichnet, dass** in dem ersten Kühlbereich (3) eine Glasscheibe auf vollständig mit Schnur umwickelten Walzen (15) befördert wird und in dem zweiten Kühlbereich (4) eine Glasscheibe auf spärlich mit Schnur umwickelten Walzen (17) befördert wird.

3. Verfahren nach Anspruch 1 oder 2, **dadurch gekennzeichnet, dass** die Glasscheibe mindestens 20 Sekunden lang in dem ersten Kühlbereich (3) bleibt.

4. Verfahren nach einem der Ansprüche 1 - 3, **dadurch gekennzeichnet, dass** die Strahlabstände der Düsen (12, 13, 14) des ersten und zweiten Kühlbereichs in jedem Bereich (3, 4) unabhängig voneinander gesteuert werden.

5. Gerät zum Tempern von Glasscheiben, wobei das Gerät einen Ofen (2), Walzen (17) in dem Ofen, die zum Hin- und Herbewegen der Glasscheiben hin und her gedreht werden, eine Kühleinheit (3, 4) mit einem ersten und einem zweiten Kühlbereich, erste Kühlluftkammern (10), deren Düsen (12, 13) im ersten Kühlbereich sind, zweite Kühlluftkammern (11), deren Düsen (14) im zweiten Kühlluftbereich sind, Mittel (6, 7, 8) zum getrennten Leiten der Kühlluft in die ersten und zweiten Kühlluftkammern (10, 11) und Förderwalzen (15, 17) in den Kühlbereichen umfasst, wobei die Walzen (15) des ersten Kühlbereichs (3) dazu ausgelegt sind, kontinuierlich in einer Richtung gedreht zu werden, **dadurch gekennzeichnet, dass** die Düsen der ersten Kühlluftkammern (10) Schlitzdüsen (12, 13) sind, dass die Düsen (14) der zweiten Kühlluftkammern (11) lochartige Düsen sind, wobei die Löcher kreisförmig sind, und die Walzen (17) des zweiten Kühlbereichs (4) dazu ausgelegt sind, hin und her gedreht zu werden.

6. Gerät nach Anspruch 5, **dadurch gekennzeichnet, dass** die Walzen (15) des ersten Kühlbereichs (3) vollständig mit Schnur umwickelt sind und die Walzen (17) des zweiten Kühlbereichs (4) nur spärlich mit Schnur umwickelt sind.

7. Gerät nach Anspruch 5 oder 6, **dadurch gekennzeichnet, dass** die Glasscheiben eine Verweilzeit von mindestens 20 Sekunden im ersten Kühlbereich (3) haben.

8. Gerät nach einem der Ansprüche 5 - 7, **dadurch gekennzeichnet, dass** die Schlitzdüse (13) mit einer Anordnung aus dicht gebohrten Löchern aufgebaut ist, wobei der Steg zwischen den Löchern den Durchmesser der Löcher nicht übersteigt.

9. Gerät nach einem der Ansprüche 5 - 8, **dadurch gekennzeichnet, dass** Strahlabstände für die Düsen (12, 13, 14) des ersten und zweiten Kühlbereichs (3, 4) sowohl oberhalb als auch unterhalb der Glasscheibe getrennt steuerbar sind.

## Revendications

1. Procédé pour la trempe de feuilles de verre, ledit procédé comprenant le chauffage des feuilles de verre à une température de trempe dans un four (2) dans lequel les feuilles de verre sont déplacées en avant et en arrière tout en étant supportées par des rouleaux (17), et l'acheminement des feuilles de verre chauffées vers une unité de refroidissement (3, 4) divisée en deux zones de refroidissement avec des pressions de décapage contrôlées séparément, les feuilles de verre étant entraînées sans arrêt à travers la première zone de refroidissement (3) et vers la deuxième zone de refroidissement (4), **caractérisé en ce que** dans la première zone de refroidissement (3), de l'air de refroidissement est soufflé sur des surfaces des feuilles de verre à l'aide de buses à fente (12, 13), **en ce que** dans la deuxième zone de refroidissement (4), de l'air de refroidissement est soufflé sur des surfaces des feuilles de verre à l'aide de buses à orifice (14), et **en ce que** la feuille de verre est déplacée en avant et en arrière sur les rouleaux (17) dans la deuxième zone de refroidissement (4).

2. Procédé selon la revendication 1, **caractérisé en ce que** dans la première zone de refroidissement (3), une feuille de verre est transportée sur des rouleaux entièrement entourés par des câbles (15) et, dans la deuxième zone de refroidissement (4), une feuille de verre est transportée sur des rouleaux partiellement entourés par des câbles (17).

3. Procédé selon la revendication 1 ou 2, **caractérisé en ce que** la feuille de verre reste dans la première zone de refroidissement (3) pendant au moins 20 secondes.

4. Procédé selon l'une quelconque des revendications 1 - 3, **caractérisé en ce que** les distances de soufflage des buses (12, 13, 14) des première et deuxième zones de refroidissement sont contrôlées indépendamment dans chaque zone (3, 4).

5. Dispositif pour la trempe de feuilles de verre, ledit dispositif comprenant un four (2), des rouleaux (17) dans un four, lesquels effectuent une rotation vers l'avant et vers l'arrière pour déplacer les feuilles de verre vers l'avant et vers l'arrière, une unité de refroidissement (3, 4) comprenant une première et une deuxième zone de refroidissement, des premiers caissons d'air de refroidissement (10) avec leurs buses (12, 13) dans la première zone de refroidissement, des deuxièmes caissons d'air de refroidissement (11) avec leurs buses (14) dans la deuxième zone de refroidissement, des moyens (6, 7, 8) destinés à guider l'air de refroidissement séparément vers les premiers et deuxièmes caissons d'air de refroidissement (10, 11), et des rouleaux de transport (15, 17) dans les zones de refroidissement, les rouleaux (15) de la première zone de refroidissement (3) étant adaptés pour tourner en continu dans une direction, **caractérisé en ce que** les buses des premiers caissons d'air de refroidissement (10) sont des buses à fente (12, 13), **en ce que** les buses (14) des deuxièmes caissons d'air de refroidissement (11) sont des buses à orifice, les orifices étant circulaires, et les rouleaux (17) de la deuxième zone de refroidissement (4) étant adaptés pour tourner vers l'avant et vers l'arrière.

6. Dispositif selon la revendication 5, **caractérisé en ce que** les rouleaux (15) de la première zone de refroidissement (3) sont entièrement entouré par un câble, et les rouleaux (17) de la deuxième zone de refroidissement (4) sont partiellement entourés par un câble.

7. Dispositif selon la revendication 5 ou 6, **caractérisé en ce que** les feuilles de verre restent dans la première zone de refroidissement (3) pendant au moins 20 secondes.

8. Dispositif selon l'une quelconque des revendications 5 - 7, **caractérisé en ce que** la buse à fente (13) est construite avec un réseau de trous percés densément, les âmes entre les trous ne dépassant pas le diamètre des trous.

9. Dispositif selon l'une quelconque des revendications 5 - 8, **caractérisé en ce que** des distances de soufflage pour les buses (12, 13, 14) des première et deuxième zones de refroidissement (3, 4) peuvent être contrôlées indépendamment à la fois au-dessus et en dessous de la feuille de verre.
